# EUROPÄISCHE PATENTSCHRIFT

(11) **EP 2 108 996 B1**
(45) Veröffentlichungstag und Bekanntmachung des Hinweises auf die Patenterteilung: **28.12.2011**
(21) Anmeldenummer: 08103431.6
(22) Anmeldetag: 08.04.2008
(51) Int. Cl.: G02F 1/19

(54) **Optische Schaltungsvorrichtung**
Optical switch device
Dispositif de commutation optique

(43) Veröffentlichungstag der Anmeldung: 14.10.2009
(73) Patentinhaber: SICK AG, 79183 Waldkirch (DE)
(72) Erfinder: Blöhbaum, Frank, Freiburg 79112 (DE)
(74) Vertreter: Ludewigt, Christoph

(56) Entgegenhaltungen:
- EP-A- 0 365 766
- EP-A- 1 801 546
- US-A- 5 157 537
- US-A- 5 625 729

## Beschreibung

Die Erfindung betrifft eine optische Schaltungsvorrichtung.

In vielen Anwendungsbereichen, insbesondere in der Industrie, werden zunehmend Sensorsysteme benötigt, die von einer Ein-Punkt-Auswertung zu einer mehrdimensionalen Sensorik übergehen. Zweidimensionale optoelektronische Sensorsysteme sind insbesondere in Form von Kamerasystemen in vielfältigen Ausprägungsformen bereits bekannt. Allerdings sind für viele Anwendungen jedoch auch dreidimensionale optoelektronische Sensorsysteme wünschenswert, um beispielsweise Räume geeignet überwachen oder Maschinen, wie Roboter oder Greifarme, optimal steuern zu können.

Eine Überwachung eines dreidimensionalen Raumes ist beispielsweise möglich mit zwei Kameras, die in definierter Entfernung zueinander angeordnet sind (Stereo-Kamera-Anordnung). Allerdings ist zur exakten Bestimmung der Lage eines Objekts im Raum eine aufwändige Signalverarbeitung und eine hohe Prozessorleistung notwendig. Zudem müssen die beiden Kameras mit hohem Aufwand exakt zueinander ausgerichtet werden. Schließlich können je nach Lage des Objekts relativ zu den Kameras Abschattungsprobleme auftauchen, die eine exakte Bestimmung der Lage des Objekts im Raum verhindern.

Eine alternative Lösung zur Überwachung eines dreidimensionalen Raumes sieht vor, den Raum mit lediglich einer herkömmlichen Kamera zu überwachen, den Raum jedoch zusätzlich mit einer strukturierten Beleuchtung auszuleuchten, so dass mittels geeigneter Bildauswertung 3D-Aussagen über räumlich verteilte Objekte möglich sind. Ein derartiges System ist jedoch sehr komplex und daher kostenintensiv. Zudem muss eine aufwändige Beleuchtung bereitgestellt werden, wobei die Verarbeitungsgeschwindigkeit dieses Systems jedoch vergleichsweise klein ist.

Ferner sind Entfernungsbildkameras bekannt, die Lichtpulse aussenden und die Laufzeit der an Gegenständen reflektierten Lichtpulse bestimmen. Ein solches System ist beispielsweise beschrieben in IEEE journal of solid-state circuits 39 (2004) 7, pp. 1208-1212, "A 4 x 64 pixel CMOS image sensor for 3-D measurement applications", Elkhalili, O.; Schrey, O. M.; Mengel, P.; Petermann, M.; Brockherde, W.; Hosticka, B. J.. Für diese Entfernungsbildkameras sind jedoch sehr leistungsstarke Lichtquellen, insbesondere Laser mit einer Leistung von mehr als 100W notwendig. Nachteilig ist zudem, dass ein hoher systematischer Fehler bei der Entfernungsmessung auftritt und somit keine ausreichende Genauigkeit gewährleistet werden kann. Derzeit sind für derartige 3D-Kameras auch nur spezielle Empfangschips mit geringer Ortsauflösung bekannt, die zudem sehr kostenintensiv sind.

Alternativ zur Entfemungsbildkamera kann auch eine amplitudenmodulierte CW-Beleuchtung verwendet und eine Phasenmessung mittels direktmischendem Photoempfänger durchgeführt werden, wie z. B. bei der Kamera mit der Bezeichnung SR-3000 der Firma MESA Imaging AG, Technoparkstrasse 1, CH 8005-Zürich (http://www.mesa-imaging.ch/prodviews.php). Bedingt durch die relativ lange Integrationszeit sind die Nachteile dieser Technologie die Anfälligkeit gegenüber Mehrwege-Reflexionen und die Hintergrundlichtempfindlichkeit. Eine Reduzierung der Hintergrundlichtempfindlichkeit kann mit Spezialschaltungen erfolgen, die allerdings das erreichbare Signal-/Rauschverhältnis verschlechtern. Die mit den direktmischenden Photoempfängern bislang erreichten Pixelzahlen sind zudem für den Einsatz in der Automatisierungs- und Sicherheitstechnik sowie der Logistik und Robotik um den Faktor 5 bis 10 zu niedrig.

Da Licht eine Strecke von 1 mm in einer Zeit von 3,33 ps zurücklegt, kann eine Entfernung zwischen der Kamera und dem Gegenstand von 1 mm dann aufgelöst werden, wenn eine Zeit von 6,67 ps aufgelöst werden kann. Für eine Abstandsmessung von 1 m ist immerhin eine Zeitauflösung von 6,67 ns vonnöten.

Um die Entfernung hinreichend genau bestimmen zu können, sind somit optische Verschlüsse, welche auch als Shutter bezeichnet werden, vonnöten, welche eine Reaktionszeit von weniger als 10 ns aufweisen. Derzeitig bekannte Shutter wie beispielsweise ferroelektrische Shutter oder Shutter basierend auf Flüssigkristallen sind jedoch um Größenordnungen langsamer oder wurden, wie beispielsweise Multiple-Quantum-Well-Shutter (MQW-Shutter), unter Verwendung von industriell kaum nutzbaren Prozessen auf GaAS-Basis entwickelt.

Die EP 0 365 766 A2 beschreibt einen optischen Modulator, in dem ein mehrschichtiges Sandwichsubstrat aus GaAs und AlₓGa₁₋ₓAs eine Quantum-Well-Struktur bildet. Wegen der Kopplung an Oberflächenplasmonen zeigt die Qantum-Well-Struktur ein scharfes Absorptionsmaximum bei einer bestimmten Energie, so dass ein auf das Absorptionsmaximum abgestimmter einfallender Lichtstrahl nur zu einem sehr geringen Grad transmittiert wird. Durch Anlegen eines elektrischen Feldes lässt sich das Absorptionsmaximum aufgrund des Stark-Effekts verschieben und damit die Transmissivität für das einfallende Licht beeinflussen.

Aus der US 5,157,537 ist ein weiterer Lichtmodulator bekannt, bei dem auf einem n-Silizium-Substrat eine als Gitter strukturierte Metallschicht vorgesehen ist. In der Verarmungsschicht zwischen Substrat und Metall ist die Ladungsträgerkonzentration veränderbar, um die Entstehung von Oberflächenplasmonen und damit die Reflektivität zu beeinflussen. In einer Ausführungsform wird auf jedem Pixel einer Matrix jeweils ein solcher Lichtmodulator mit einer Photodiode und einer Treiberschaltung integriert. Das von dem Photodetektor registrierte einfallende Licht steuert dabei über die Treiberschaltung den Modulator.

In der US 5,625,729 ist eine optoelektronische Vorrichtung mit zwei ineinander verschränkten, ein Gitter bildenden Elektroden auf einem Substrat beschrieben. In einer Anwendung als Lichtdetektor wird ein elektrisches Feld an das Substrat angelegt und die Intensität des einfallenden Lichts anhand eines zwischen den Elektroden fließenden Stroms gemessen.

Die EP 1 801 546 A1 offenbart einen Informationsträger in einem Encoder, der eine Metallschicht mit wenigstens einer Spur von Kennzeichen aufweist.

Die Aufgabe der Erfindung besteht darin, eine Schaltungsvorrichtung, insbesondere zur Schaltung eines Shutters, bereitzustellen, welche eine sehr kleine Schaltzeit, vorzugsweise eine Schaltzeit von weniger als 10 ns, aufweist, gleichzeitig jedoch kostengünstig und einfach herzustellen ist.

Die Aufgabe der Erfindung wird gelöst durch eine Schaltungsvorrichtung mit den Merkmalen des Patentanspruchs 1.

Vorteilhafte Ausgestaltungen und Weiterbildungen der Erfindung sind in den Unteransprüchen angegeben.

Die erfindungsgemäße Schaltungsvorrichtung weist ein Substrat aus einem Halbleitermaterial auf, auf welchem eine Metallschicht mit einer oberen und einer unteren Grenzschicht angeordnet ist. Mit der unteren Grenzschicht liegt die Metallschicht auf dem Substrat auf. Die Höhe der Metallschicht ist derart ausgebildet ist, dass sich bei Auftreffen von elektromagnetischer Strahlung in der Metallschicht Plasmonen ausbilden können. Erfindungsgemäß sind Mittel zum Ändern der Ladungsträgerkonzentration des Halbleitermaterials vorgesehen.

Die Erfindung beruht auf der Idee, den bekannten Effekt der Plasmonenmoden, welche sich nach Anregung in einer dünnen Metallschicht ausbreiten und eine Transmission von elektromagnetischer Strahlung durch die Metallschicht erlauben (vgl. F. Pigeon et al.: "Identity of long-range surface plasmons along asymmetric structures and their potential for refractometric sensors". Journal of Applied Physics, Vol. 90, No. 2, Seiten 852 - 859 und N. Bonod et al.: "Resonant optical transmission through thin metallic films with and without holes", Optics Express, Vol. 11, No. 5, Seiten 482 - 490), für einen Schaltvorgang auszunutzen. Dieser Effekt ist abhängig von der Art des Materials, welches an die Metallschicht angrenzt. Voraussetzung für die Ausbildung von Plasmonen ist, dass die Metallschicht mit beiden Grenzflächen an ein Dielektrikum, beispielsweise an Luft oder einen isolierenden Festkörper, angrenzt.

Ist beispielsweise die Ladungsträgerkonzentration in dem Halbleiter gering, bildet der Halbleiter einen Isolator und es besteht die Möglichkeit, dass auf die Schaltungsvorrichtung einfallende elektromagnetische Strahlung durch die Metallschicht transmittiert wird. Werden jedoch Ladungsträger zugeführt und die Ladungsträgerkonzentration derart erhöht, dass der Halbleiter leitend wird, können sich insbesondere an der unteren Grenzschicht zwischen dem Substrat und der Metallschicht keine Plasmonen ausbilden, so dass keine elektromagnetische Strahlung transmittiert wird. Mit der erfindungsgemäßen Schichtstruktur kann das Verhältnis von reflektierter und transmittierter Strahlung gezielt beeinflusst werden. Sowohl die reflektierte als auch die transmittierte Komponente der einfallenden elektromagnetischen Strahlung kann als Sensorsignal dienen. Insbesondere kann die Schichtstruktur aus Substrat und Metallschicht als Shutter fungieren, der bei Zufuhr von Ladungsträgern schließt, wobei die Schaltzeiten derartiger Shutter weniger als 10 ns betragen.

Bei der Erfindung wird eine Änderung der Ladungsträgerkonzentration durch Erzeugen eines elektrischen Feldes innerhalb des Substrats, beispielsweise durch Anlegen einer Spannung an das Substrat erreicht. Dazu müssen in geeigneter Weise Elektroden an das Substrat kontaktiert werden, wobei beispielsweise eine der Elektroden die Metallschicht sein kann.

Erfindungsgemäß wird eine Änderung der Ladungsträgerkonzentration durch den Avalancheeffekt nach Anlegen einer Spannung an das Substrat erreicht. Dieser Effekt kann in einer Zeit von etwa 100 fs ablaufen und gewährleistet somit eine extrem kurze Schaltzeit.

Erfindungsgemäß besteht das Substrat aus einem hoch verarmten Halbleitermaterial, vorzugsweise aus Silizium, da dieses Material einfach und kostengünstig zu verarbeiten ist.

Die Metallschicht besteht bevorzugt aus Gold, Silber, Kupfer oder Aluminium, da sich diese Metalle besonders einfach auf die Oberfläche des Substrats aufbringen lassen.

Bei einer vorteilhaften Ausgestaltung der Erfindung weist die Metallschicht eine Höhe auf, welche größer als die Eindringtiefe der Plasmonenwelle ist und welche etwa 20 bis 100 nm beträgt. Dadurch ist gewährleistet, dass sich die Plasmonenwelle ungehindert in der Metallschicht ausbreiten kann, um eine Transmission der einfallenden elektromagnetischen Strahlung zu ermöglichen.

In einer besonders bevorzugten Weiterbildung der Erfindung ist die Metallschicht strukturiert, da eine derartige Metallschicht die Ausbildung der Plasmonenwelle begünstigt. Insbesondere kann bei einer derartigen Metallschicht die elektromagnetische Strahlung zur Bildung der Plasmonen auch nahezu senkrecht auf die Metallschicht einfallen, während sich bei einer im wesentlichen ebenen Metallschicht Plasmonen im Wesentlichen nur dann ausbilden, wenn die elektromagnetische Strahlung unter kleinen Winkeln auf die Metallschicht auftrifft.

In einer ersten bevorzugten Ausführungsform sind die Strukturen der Metallschicht sinusförmig ausgebildet. Alternativ können die Strukturen auch binär ausgebildet sein. Dabei können die Strukturen sowohl an der oberen oder der unteren oder an beiden Grenzschichten ausgebildet sein. Beide Arten von Strukturen lassen sich einfach und kostengünstig fertigen.

Vorzugsweise weist die Metallschicht Strukturen einer Gitterperiode A und einer Tiefe d auf, wobei die Gitterperiode A der Strukturen vorzugsweise der Gleichung A = λ/nₚ* genügt, wobei λ die Wellenlänge der verwendeten elektromagnetischen Strahlung und nₚ* den effektiven Index eines Plasmonmodes in der Metallschicht bezeichnet, da eine derartige Dimensionierung der Strukturen die Ausbildung der Plasmonen weiter begünstigt.

Die Tiefe der Strukturen beträgt etwa 60 nm bis 90 nm. Dies begünstigt ebenfalls die Ausbildung der Plasmonenmoden und eine möglichst hohe Transmission der einfallenden elektromagnetischen Strahlung.

Bei einer besonders bevorzugten Ausführungsform der Erfindung ist das Substrat auf einer Photodiode oder einem Photodiodenarray angeordnet. Diese Ausführungsform ermöglicht die Realisierung eines monolithisch integrierten Sensor-ICs mit einem elektronisch beeinflussbaren extrem schnellen optischen Schalter mit einer Schaltzeit von weniger als 10 ns. Mit dieser Ausbildung ist eine industrielle Massenfertigung einfacher möglich und kostengünstig.

Die Erfindung wird anhand der nachfolgenden Figuren ausführlich erläutert. Es zeigt
- Figur 1: eine schematische Darstellung eines Vergleichsbeispiels der Erfindung,
- Figur 2: eine schematische Darstellung eines ersten Ausführungsbeispiels der Erfindung und
- Figur 3: eine schematische Darstellung eines zweiten Ausführungsbeispiels der Erfindung.

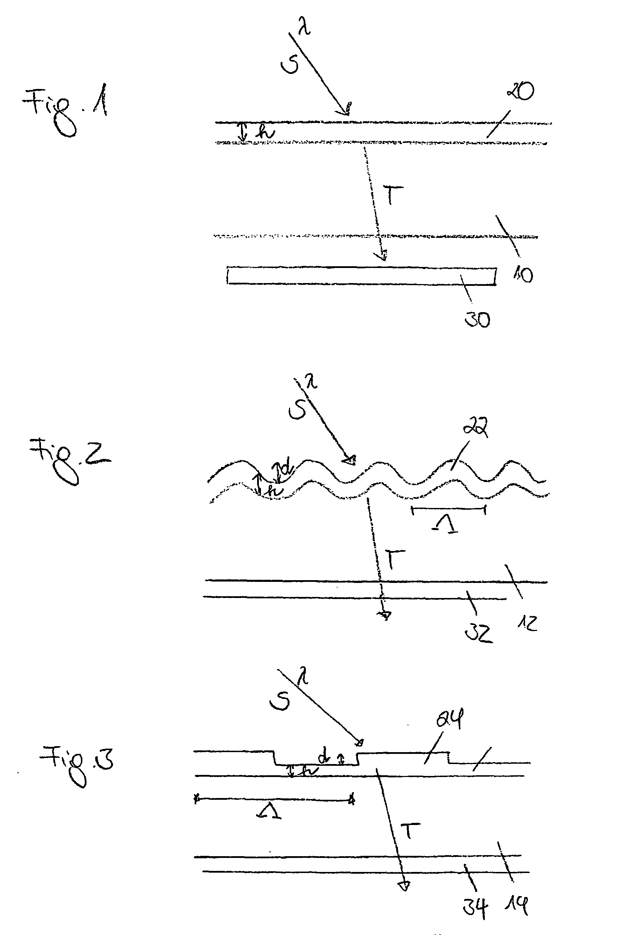

Die Figur 1 zeigt schematisch einen Schnitt durch ein Vergleichsbeispiel mit einem Substrat 10, auf welchem eine Metallschicht 20 angeordnet ist. Die Metallschicht 20 weist eine obere und eine untere Grenzschicht auf, wobei an die untere Grenzschicht das Substrat 10 grenzt, während an die obere Grenzschicht bei spielsweise Luft grenzt. Die Metallschicht 20 weist eine homogene Höhe h auf und ist im wesentlichen eben. Die Höhe h ist dabei derart ausgebildet, dass bei Einfall von elektromagnetischer Strahlung S der Wellenlänge λ die Ausbildung von Plasmonen in der Metallschicht 20 möglich ist. Beispielsweise beträgt die Höhe h 30 nm.

Die Figur 2 zeigt schematisch einen Schnitt durch ein erstes Ausführungsbeispiel mit einem Substrat 12, auf welchem eine Metallschicht 22 angeordnet ist. Die Metallschicht 22 weist eine obere und eine untere Grenzschicht auf, wobei an die untere Grenzschicht das Substrat 12 grenzt, während an die obere Grenzschicht beispielsweise Luft grenzt. Die Metallschicht 20 weist eine homogene Höhe h auf, ist jedoch sowohl an der oberen als auch an der unteren Grenzschicht sinusförmig strukturiert mit einer Gitterperiode A der Sinusstrukturen, welche vorzugsweise durch die Gleichung A = λ/nₚ* auf die Wellenlänge λ der verwendeten elektromagnetischen Strahlung S abgestimmt ist, wobei nₚ* den effektiven Index eines Plasmonmodes in der Metallschicht 22 bezeichnet. Die Strukturen weisen eine Tiefe d auf, welche kleiner als die Gitterperiode A ist und vorzugsweise etwa 1/5*Λ bis 1/8*Λ beträgt.

Die Figur 3 zeigt schematisch einen Schnitt durch ein zweites Ausführungsbeispiel mit einem Substrat 14, auf welchem eine Metallschicht 24 angeordnet ist. Die Metallschicht 24 weist eine obere und eine untere Grenzschicht auf und, wobei an die untere Grenzschicht das Substrat 14 grenzt, während an die obere Grenzschicht beispielsweise Luft grenzt. Die Metallschicht 24 weist an ihrer oberen Grenzschicht eine binäre Strukturierung auf, welche sich durch Stufen in der oberen Grenzschicht ergibt wie sie beispielsweise bei einem Strichgitter auftreten können. Die Metallschicht 24 weist daher keine homogene Höhe, sondern eine minimale Höhe h auf. Die Strukturen weisen eine Tiefe d auf, wobei die maximale Höhe der Metallschicht der Summe der minimalen Höhe h und der Tiefe d entspricht. Für die Gitterperiode A und die Tiefe d gelten die zuvor dargelegten Beziehungen.

Das Substrat 10, 12, 14 ist in sämtlichen Ausführungsbeispielen vorzugsweise aus hoch verarmten Silizium gefertigt, die Metallschicht 20, 22, 24 ist beispielsweise aus Gold oder Aluminium. Jedes der Substrate 10, 12, 14 der verschiedenen Ausfüh rungsbeispiele kann alternativ mit Abstand vor einem Lichtempfänger 30 wie in Figur 1 gezeigt oder erfindungsgemäß direkt auf einem Lichtempfänger 32, 34 wie in den Figuren 2 und 3 gezeigt angeordnet werden. Die Lichtempfänger 30, 32, 34 können beispielsweise als Photodiode oder als Photodiodenarray ausgebildet werden. Die Anordnung des Substrats 12, 14 direkt auf dem Lichtempfänger 32, 34 kann einfach und kostengünstig monolithisch hergestellt werden.

Jedes der dargestellten Ausführungsbeispiele kann als Shutter für eine Entfernungsbildkamera basierend auf einer Laufzeitmessung dienen. Fällt die elektromagnetische Strahlung S auf die Metallschicht 20, 22, 24, kann aufgrund der Ausbildung der Plasmonen ein Teil der einfallenden Strahlung S als transmittierte Strahlung T transmittiert werden.

Es sind an dem Substrat 10, 12, 14 und/oder der Metallschicht 20, 22, 24 Mittel vorgesehen, mit welchen die Ladungsträgerkonzentration in dem Substrat 10, 12, 14 geändert, insbesondere signifikant erhöht werden kann. Dazu wird an das Substrat 10, 12, 14 oder zwischen Substrat 10, 12, 14 und Metallschicht 20, 22, 24 eine Spannung angelegt, die Ladungsträger in dem Substrat 10, 12, 14 injiziert. Bei geeigneter Verschaltung und Spannung kann beispielsweise ein Avalancheeffekt in dem Substrat 10, 12, 14 erzielt werden. Die erhöhte Ladungsträgerkonzentration in dem Substrat 10, 12, 14 bewirkt jedoch, dass sich keine Plasmonen in der Metallschicht 20, 22, 24 ausbilden können und somit keine Strahlung transmittiert wird. Die Metallschicht 20, 22, 24 fungiert somit als Shutter, der sich durch Anlegen einer Spannung schließen lässt. Da sich der Avalancheeffekt innerhalb von einigen 100 fs ausbildet, können Schaltzeiten, insbesondere Verschlusszeiten des Shutters, von weniger als 1 ns realisiert werden. Mit einem derartig schnell schließenden Shutter, der insbesondere vor einem hochauflösenden Photodiodenarray angeordnet wird, ist es möglich, höchauflösende dreidimensionale Kamerasysteme kostengünstig bereitzustellen.

### Bezugszeichenliste

- 10: Substrat
- 12: Substrat
- 14: Substrat
- 20: Metallschicht
- 22: Metallschicht
- 24: Metallschicht
- 30: Lichtempfänger
- 32: Lichtempfänger
- 34: Lichtempfänger

- S: einfallende elektromagnetische Strahlung
- T: transmittierte elektromagnetische Strahlung

- h: Dicke
- d: Tiefe
- Λ: Gitterperiode
- λ: Wellenlänge

## Patentansprüche

1. Schaltungsvorrichtung mit einem Substrat (10, 12, 14) aus einem Halbleitermaterial, auf welchem eine Metallschicht (20, 22, 24) mit einer oberen und einer unteren Grenzfläche an ein Dielektrikum angrenzend angeordnet ist, so dass sich bei Auftreffen von elektromagnetischer Strahlung (S) in der Metallschicht (20, 22, 24) Plasmonen ausbilden können, wobei Mittel zum Ändern der Ladungsträgerkonzentration des Halbleitermaterials durch Anlegen einer Spannung an das Substrat (10, 12, 14) in Form von an das Substrat kontaktierten Elektroden vorgesehen sind,
**dadurch gekennzeichnet,**
**dass** die Höhe (h) der Metallschicht (20, 22, 24) 20 nm bis 100 nm beträgt und dass das Halbleitermaterial an Ladungsträgern derart hoch verarmt ist, dass es aufgrund der geringen Ladungsträgerkonzentration einen Isolator bildet, so dass die Metallschicht (20, 22, 24) durch Anlegen einer Spannung an das Substrat (10, 12, 14) aufgrund des Avalancheeffekts als Shutter mit Schaltzeiten von weniger als 10ns, insbesondere weniger als 1 ns fungiert, und dass die Schaltungsvorrichtung einen Lichtempfänger aufweist, auf dem das Substrat (10, 12, 14) monolithisch angeordnet ist.

2. Schaltungsvorrichtung nach Anspruch 1,
**dadurch gekennzeichnet, dass** dass Substrat (10, 12, 14) aus Silizium besteht.

3. Schaltungsvorrichtung nach Anspruch 1 oder 2,
**dadurch gekennzeichnet, dass** die Metallschicht (20, 22, 24) aus Gold, Silber, Kupfer oder Aluminium besteht.

4. Schaltungsvorrichtung nach einem der vorhergehenden Ansprüche,
**dadurch gekennzeichnet, dass** die Metallschicht (20, 22, 24) eine Höhe (h) aufweist, welche größer als die Eindringtiefe der Plasmonenwelle ist.

5. Schaltungsvorrichtung nach einem der vorhergehenden Ansprüche,
**dadurch gekennzeichnet, dass** die Metallschicht (22, 24) strukturiert ist.

6. Schaltungsvorrichtung nach Anspruch 5,
**dadurch gekennzeichnet, dass** die Strukturen der Metallschicht (22, 24) sinusförmig oder binär ausgebildet sind.

7. Schaltungsvorrichtung nach einem der vorhergehenden Ansprüche,
**dadurch gekennzeichnet, dass** die Metallschicht (22, 24) Strukturen einer Gitterperiode (A) und einer Tiefe (d) aufweist, wobei die Gitterperiode (A) der Strukturen vorzugsweise der Gleichung A = λ/nₚ* genügt, wobei λ die Wellenlänge der verwendeten elektromagnetischen Strahlung (S) und nₚ* den effektiven Index eines Plasmonmodes in der Metallschicht (20, 22, 24) bezeichnet.

8. Schaltungsvorrichtung nach Anspruch 7,
**dadurch gekennzeichnet, dass** die Tiefe (d) der Strukturen etwa 60 nm bis 90 nm beträgt.

9. Schaltungsvorrichtung nach einem der vorhergehenden Ansprüche,
**dadurch gekennzeichnet, dass** der Lichtempfänger (30 32, 34) als Photodiode oder Photodiodenarray ausgebildet ist.

## Claims

1. A switching apparatus with a substrate (10, 12, 14) made of a semiconductor material on which a metal layer (20, 22, 24) with an upper and a lower boundary surface is arranged adjacent to a dielectric medium, so that upon impinging of electromagnetic radiation (S) plasmons may form in the metal layer (20, 22, 24), wherein means for changing the charge carrier concentration of the semiconductor material by applying a voltage to the substrate (10, 12, 14) are provided in the form of electrodes contacted on the substrate,
**characterized in that** the height (h) of the metal layer (20, 22, 24) is 20 nm to 100 nm, and **in that** the semiconductor material is highly depleted of charge carriers to a degree that it constituted an isolator due to the low charge carrier concentration, so that the metal layer (20, 22, 24) acts, by applying a voltage to the substrate (10, 12, 14), as a shutter with switching times of less than 10 ns, in particular less than 1 ns, due to the avalanche effect, and **in that** the switching apparatus comprises a light receiver on which the substrate (10, 12 , 14) is arranged monolithically.

2. The switching apparatus according to claim 1,
**characterized in that** the substrate (10, 12, 14) consists of silicon.

3. The switching apparatus according to claim 1 or 2,
**characterized in that** the metal layer (10, 12, 14) consists of gold, silver, copper, or aluminium.

4. The switching apparatus according to any of the preceding claims,
**characterized in that** the metal layer (20, 22, 24,) has a height (h) which is larger than the depth of penetration of the plasmon wave.

5. The switching apparatus according to any of the preceding claims,
**characterized in that** the metal layer (22, 24) is structured.

6. The switching apparatus according to claim 5,
**characterized in that** the structures of the metal layer (22, 24) are formed sinusoidal or binary.

7. The switching apparatus according to any of the preceding claims,
**characterized in that** the metal layer (22) comprises structures with a lattice period (A) and a depth (d), wherein the lattice period (A) of the structures preferably satisfies the equation A = λ/nₚ*, wherein λ refers to the wavelength of the electromagnetic radiation (S) as used and nₚ* to the effective index of a plasmon mode in the metal layer (20, 22, 24).

8. The switching apparatus according to claim 7,
**characterized in that** the depth (d) of the structure is about 60 nm to 90 nm.

9. The switching apparatus according to any of the preceding claims,
**characterized in that** the light receiver (30, 32, 34) is made as a photodiode or a photodiode array.

## Revendications

1. Dispositif de commutation avec un substrat (10, 12, 14) consisté d'un matériau semi-conducteur sur lequel une couche métallique (20, 22, 24) avec une face limite supérieure et inférieure est disposée adjacent à un diélectrique, de sorte que des plasmons peuvent se former dans la couche métallique (20, 22, 24) en cas de irradiation du rayonnement électromagnétique (S), et des moyens pour changer la concentration des porteurs de charge du matériau semi-conducteur sont prévus en appliquant une voltage sur le substrat (10, 12, 14) sous forme d'électrodes contactés sur le substrat, **caractérisé en ce que** la hauteur (h) de la couche métallique (20, 22, 24) est de 20 nm à 100 nm et **en ce que** le matériau semi-conducteur est appauvri de porteurs de charge au point de qu'il constitue un isolateur en raison de la concentration faible de porteurs de charge, de sorte que la couche métallique (20, 22, 24) fait fonction d'obturateur en appliquant une voltage sur le substrat (10, 12, 14) par l'effet d'avalanche avec des temps de commutation de moins de 10 ns, en particulier moins de 1 ns, et **en ce que** le dispositif de commutation comprend un récepteur de lumière sur lequel le substrat (10, 12, 14) est disposé de façon monolithique.

2. Dispositif de commutation selon la revendication 1, **caractérisé en ce que** le substrat (10, 12, 14) consiste de silicium.

3. Dispositif de commutation selon la revendication 1 ou 2, **caractérisé en ce que** la couche métallique (10, 12, 14) consiste de l'or, de l'argent, du cuivre ou de 'aluminium.

4. Dispositif de commutation selon l'une des revendications précédentes, **caractérisé en ce que** la couche métallique (20, 22, 24,) comprend une hauteur (h) qui est plus grande que la profondeur de pénétration de l'onde plasmon.

5. Dispositif de commutation selon l'une des revendications précédentes, **caractérisé en ce que** la couche métallique (22, 24) est structurée.

6. Dispositif de commutation selon la revendication 5, **caractérisé en ce que** les structures de la couche métallique (22, 24) sont formées sinusoïdales ou binaires.

7. Dispositif de commutation selon l'une des revendications précédentes, **caractérisé en ce que** la couche métallique (22) comprend des structures avec une période de réseau (A) et une profondeur (d) et **en ce que** la periode de réseau (A) des structures satisfait de préférence l'équation Λ=λ/nₚ*, et **en ce que** λ désigne la longueur d'onde du rayonnement électromagnétique (S) et nₚ* désigne l'indice effectif d'un mode de plasmon dans la couche métallique (20, 22, 24).

8. Dispositif de commutation selon la revendication 7, **caractérisé en ce que** la profondeur (d) des structures est d'environ 60 nm à 90 nm.

9. Dispositif de commutation selon l'une des revendications précédentes, **caractérisé en ce que** le récepteur de lumière (30, 32, 34) est formé comme une photodiode ou une matrice de photodiodes.
